# EUROPÄISCHE PATENTSCHRIFT

(11) **EP 0 808 940 B1**
(45) Veröffentlichungstag und Bekanntmachung des Hinweises auf die Patenterteilung: **06.03.2002**
(21) Anmeldenummer: 97810292.9
(22) Anmeldetag: 09.05.1997
(51) Int. Cl.: C09B 67/22, D06P 3/04, D06P 3/10, D06P 3/06, C09B 62/09

(54) **Verfahren zum Trichromie-Färben oder-Bedrucken**
Process for trichromic dyeing or printing
Procédé pour la teinture ou l'impression par trichromie

(30) Priorität: 21.05.1996 CH 127496
(43) Veröffentlichungstag der Anmeldung: 26.11.1997
(73) Patentinhaber: Ciba Specialty Chemicals Holding Inc., 4057 Basel (CH)
(72) Erfinder: Hurter, Rudolf, 4058 Basel (CH); Adam, Jean-Marie, 68300 Rosenau (FR); Casi, Francine, 68440 Eschentzwiller (FR)

(56) Entgegenhaltungen:
- EP-A- 0 043 439
- EP-A- 0 714 955

## Beschreibung

Die vorliegende Erfindung betrifft ein Verfahren zum Trichromie-Färben oder -Bedrucken von natürlichen und synthetischen Polyamidfasermaterialien.

Die der vorliegenden Erfindung zugrundeliegende Aufgabe war es, ein Verfahren zum Färben oder Bedrucken von natürlichen und synthetischen Polyamidfasermaterialien mit zur Kombination nach dem Trichromie-Prinzip geeigneten Farbstoffen zu finden.

Es wurde nun gefunden, dass man diese Aufgabe erfindungsgemäss durch das nachfolgend beschriebene Verfahren lösen kann. Die so erhaltenen Färbungen genügen den gestellten Aufgaben. Insbesondere zeichnen sich die erhaltenen Färbungen durch einen gleichmässigen Farbaufbau bei gleichzeitiger Nuancenkonstanz in verschiedenen Konzentrationen und eine gute Kombinierbarkeit aus.

Gegenstand der vorliegenden Erfindung ist ein Verfahren zum Trichromie-Färben oder -Bedrucken von natürlichem oder synthetischem Polyamidfasermaterial, welches dadurch gekennzeichnet ist, dass man
mindestens einen blaufärbenden Farbstoff der Formel (1) oder (2) 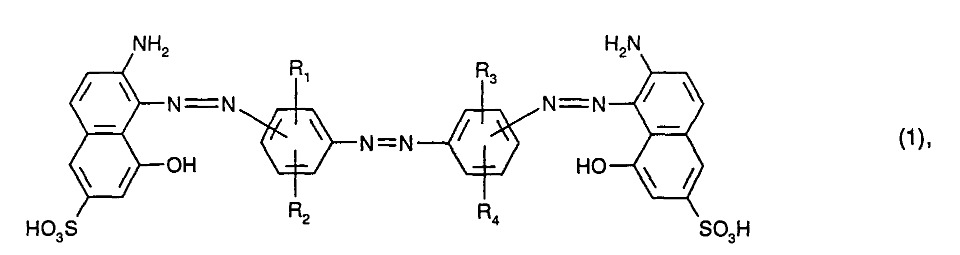 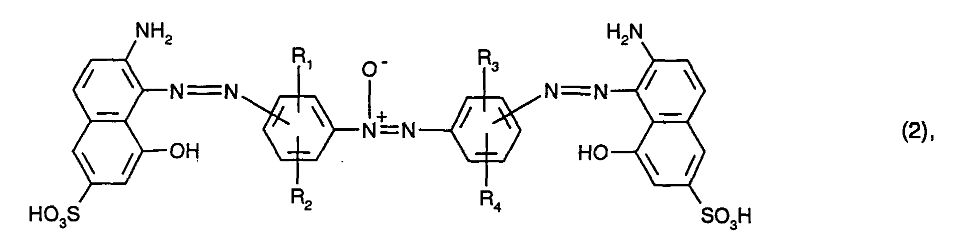 worin
R₁, R₂, R₃ und R₄ unabhängig voneinander Wasserstoff, C₁-C₄-Alkyl, C₁-C₄-Alkoxy, C₂-C₄-Alkanoylamino, Ureido, Halogen oder Sulfo sind, (siehe hierzu die EP-A-043 439),
zusammen mit mindestens einem rotfärbenden Farbstoff der Formel (3) 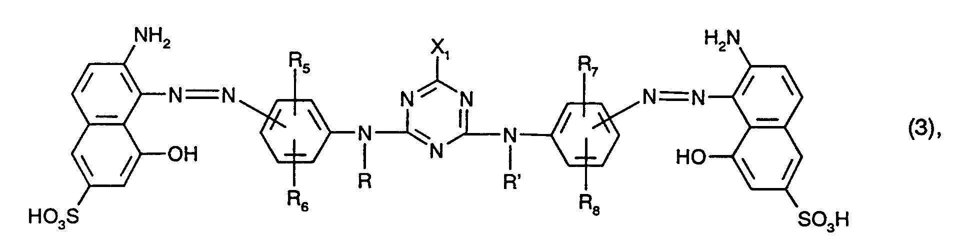 worin
R und R' unabhängig voneinander Wasserstoff oder gegebenenfalls substituiertes C₁-C₄-Alkyl,
R₅, R₆, R₇ und R₈ unabhängig voneinander Wasserstoff, C₁-C₄-Alkyl, C₁-C₄-Alkoxy, C₂-C₄-Alkanoylamino, Ureido, Halogen oder Sulfo sind und
X₁ Halogen ist,
und zusammen mit mindestens einem gelb- oder orangefärbenden Farbstoff der Formel (4) oder (5) 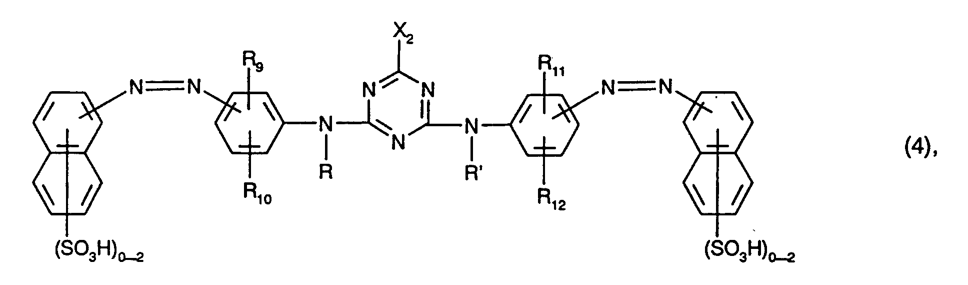 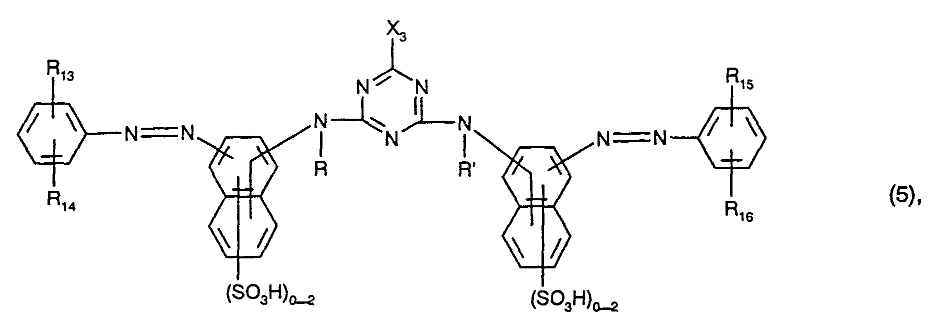 worin
R und R' unabhängig voneinander Wasserstoff oder gegebenenfalls substituiertes C₁-C₄-Alkyl,
X₂ und X₃ Halogen und
R₉, R₁₀, R₁₁, R₁₂, R₁₃, R₁₄, R₁₅ und R₁₆ unabhängig voneinander Wasserstoff, C₁-C₄-Alkyl, C₁-C₄-Alkoxy, Ureido, Halogen, Sulfo oder gegebenenfalls im Alkylteil substituiertes C₂-C₄-Alkanoylamino oder C₁-C₄-Alkoxycarbonylamino bedeuten, verwendet.

Unter Trichromie ist die additive Farbmischung passend gewählter gelb- bzw. orange-, rot- und blaufärbender Farbstoffe zu verstehen, mit denen jede gewünschte Nuance des sichtbaren Farbspektrums durch geeignete Wahl der Mengenverhältnisse der Farbstoffe eingestellt werden kann.

Als C₁-C₄-Alkyl kommen für R, R', R₁, R₂, R₃, R₄, R₅, R₆, R₇, R₈, R₉, R₁₀, R₁₁, R₁₂, R₁₃, R₁₄, R₁₅ und R₁₆ z.B. Methyl, Aethyl, Propyl, Isopropyl, Butyl, Isobutyl, sek.-Butyl oder tert.-Butyl in Betracht. Bevorzugt sind hierbei Methyl oder Aethyl, insbesondere Methyl. Die Reste R und R' in der Bedeutung als C₁-C₄-Alkyl können unsubstituiert oder beispielsweise durch Hydroxy, C₁-C₄-Alkoxy, Halogen oder Sulfato substituiert sein. Vorzugsweise sind diese Reste unsubstituiert.

Als C₁-C₄-Alkoxy kommen für R₁, R₂, R₃, R₄, R₅, R₆, R₇, R₈, R₉, R₁₀, R₁₁, R₁₂, R₁₃, R₁₄, R₁₅ und R₁₆ beispielsweise Methoxy, Aethoxy, Propoxy, Isopropoxy, Butoxy, sek.-Butoxy, Isobutoxy oder tert.-Butoxy, insbesondere Methoxy, in Betracht.

Als C₂-C₄-Alkanoylamino kommen für R₁, R₂, R₃, R₄, R₅, R₆, R₇, R₈, R₉, R₁₀, R₁₁, R₁₂, R₁₃, R₁₄, R₁₅ und R₁₆ z.B. Propionylamino oder insbesondere Acetylamino in Betracht. Die Reste R₉, R₁₀, R₁₁, R₁₂, R₁₃, R₁₄, R₁₅ und R₁₆ in der Bedeutung als C₂-C₄-Alkanoylamino können unsubstituiert oder z.B. im Alkylteil durch C₁-C₄-Alkoxy oder Hydroxy substituiert sein.

Als C₁-C₄-Alkoxycarbonylamino kommen für R₉, R₁₀, R₁₁, R₁₂, R₁₃, R₁₄, R₁₅ und R₁₆ insbesondere Methoxy- oder Aethoxycarbonylamino in Betracht. Die Reste R₉, R₁₀, R₁₁, R₁₂, R₁₃, R₁₄, R₁₅ und R₁₆ in der Bedeutung als C₁-C₄-Alkoxycarbonylamino können unsubstituiert oder z.B. im Alkylteil durch C₁-C₄-Alkoxy oder Hydroxy substituiert sein.

Als Halogen kommen für R₁, R₂, R₃, R₄, R₅, R₆, R₇, R₈, R₉, R₁₀, R₁₁, R₁₂, R₁₃, R₁₄, R₁₅ und R₁₆ beispielsweise Fluor oder Brom und insbesondere Chlor in Betracht.

X₁, X₂ und X₃ sind vorzugsweise Fluor oder Chlor, insbesondere Chlor.

R und R' sind bevorzugt unabhängig voneinander Wasserstoff oder C₁-C₄-Alkyl, insbesondere Wasserstoff.

R₁, R₂, R₃ und R₄ sind bevorzugt unabhängig voneinander Wasserstoff, C₁-C₄-Alkyl, C₁-C₄-Alkoxy, C₂-C₄-Alkanoylamino, Ureido oder Halogen, insbesondere Wasserstoff.

R₅, R₆, R₇ und R₈ sind bevorzugt unabhängig voneinander Wasserstoff, C₁-C₄-Alkyl, C₁-C₄-Alkoxy, C₂-C₄-Alkanoylamino, Ureido oder Halogen, insbesondere Wasserstoff.

R₉, R₁₀, R₁₁, R₁₂, R₁₃, R₁₄, R₁₅ und R₁₆ sind bevorzugt unabhängig voneinander Wasserstoff, C₁-C₄-Alkyl, C₁-C₄-Alkoxy, Ureido, Halogen oder gegebenenfalls im Alkylteil durch C₁-C₄-Alkoxy oder Hydroxy substituiertes C₂-C₄-Alkanoylamino oder C₁-C₄-Alkoxycarbonylamino.

Als blaufärbenden Farbstoff verwendet man bevorzugt mindestens einen Farbstoff der Formel 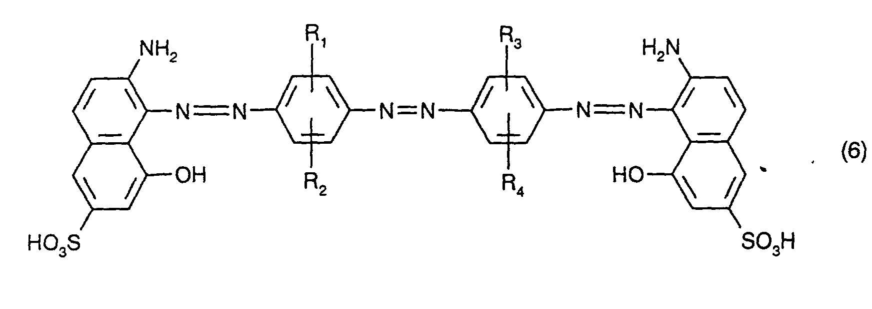 oder 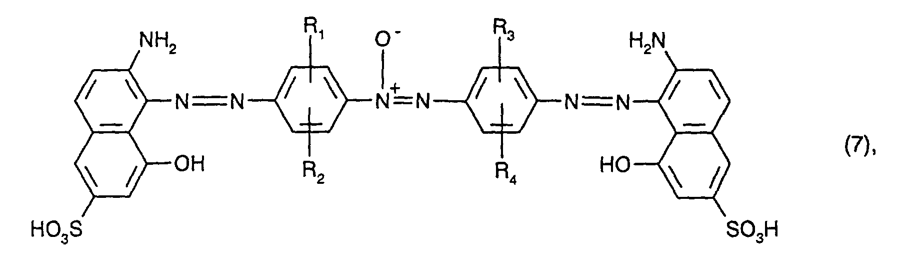 wobei für R₁, R₂, R₃ und R₄ die oben angegegebenen Bedeutungen und Bevorzugungen gelten. Vorzugsweise sind hierbei R₁, R₂, R₃ und R₄ Wasserstoff.

Besonders bevorzugt verwendet man als blaufärbenden Farbstoff mindestens einen Farbstoff der Formel (1), insbesondere mindestens einen Farbstoff der Formel (6).

Von Interesse sind ferner als blaufärbende Farbstoffe Mischungen der Farbstoffe der Formeln (1) und (2), insbesondere Mischungen der Farbstoffe der Formeln (6) und (7). Bezogen auf die Gesamtmenge der Farbstoffe der Formeln (1) und (2) ist hierbei der Anteil des Farbstoffs der Formel (1) bevorzugt 5 bis 95 Gew.-%, insbesondere 10 bis 90 Gew.-% und vorzugsweise 20 bis 80 Gew.-%. Besonders bevorzugt ist hierbei ein Anteil des Farbstoffs der Formel (1) von 40 bis 60 Gew.-%.

Als rotfärbenden Farbstoff verwendet man bevorzugt mindestens einen Farbstoff der Formel 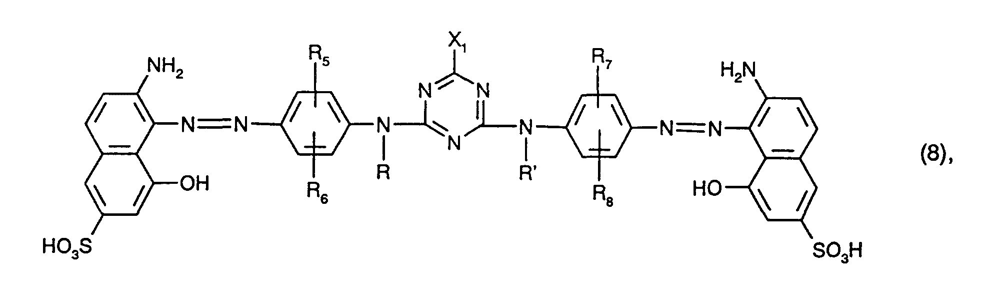 wobei für R, R', R₅, R₆, R₇, R₈ und X₁ die oben angegebenen Bedeutungen und Bevorzugungen gelten.

Besonders bevorzugt als rotfärbende Farbstoffe sind solche der Formel (3), insbesondere solche der Formel (8), worin
R und R' unabhängig voneinander Wasserstoff oder C₁-C₄-Alkyl, insbesondere Wasserstoff,
R₅, R₆, R₇ und R₈ unabhängig voneinander Wasserstoff, C₁-C₄-Alkyl, C₁-C₄-Alkoxy, C₂-C₄-Alkanoylamino, Ureido oder Halogen, insbesondere Wasserstoff, sind, und
X₁ Fluor oder insbesondere Chlor bedeutet.

Ganz besonders bevorzugt verwendet man als rotfärbenden Farbstoff einen Farbstoff der Formel

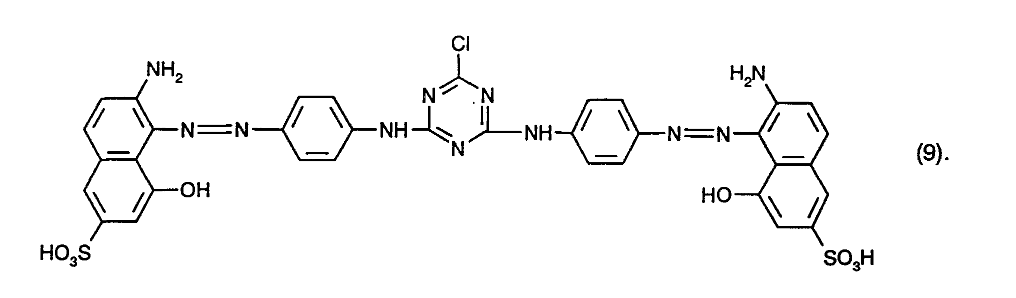

Die gelb- oder orangefärbenden Farbstoffe der Formeln (4) und (5) enthalten bevorzugt in den Naphthalinringen jeweils nur eine oder zwei Sulfogruppen, insbesondere jeweils nur eine Sulfogruppe. Die Gesamtzahl der Sulfogruppen der Farbstoffe der Formeln (4) und (5) ist bevorzugt jeweils zwei bis vier, insbesondere zwei.

Bevorzugt als gelb- oder orangefärbende Farbstoffe der Formel (4) sind solche der Formel 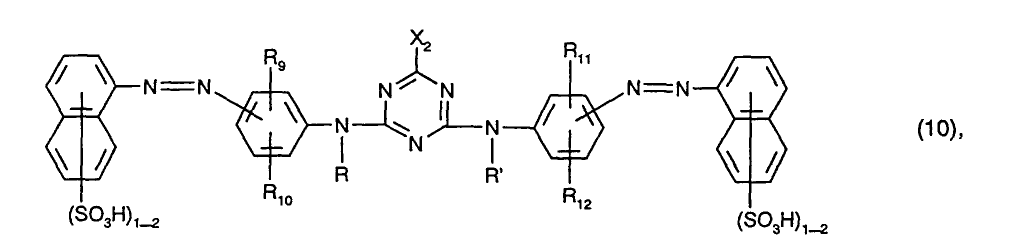 wobei für R, R', R₉, R₁₀, R₁₁, R₁₂ und X₂ die oben angegebenen Bedeutungen und Bevorzugungen gelten.

Besonders bevorzugt als gelb- oder orangefärbende Farbstoffe der Formel (4), insbesondere als Farbstoffe der Formel (10), sind solche, worin
R und R' unabhängig voneinander Wasserstoff oder C₁-C₄-Alkyl, insbesondere Wasserstoff, sind,
R₉, R₁₀, R₁₁ und R₁₂ unabhängig voneinander Wasserstoff, C₁-C₄-Alkyl, C₁-C₄-Alkoxy, Ureido, Halogen oder gegebenenfalls im Alkylteil durch C₁-C₄-Alkoxy oder Hydroxy substituiertes C₂-C₄-Alkanoylamino oder C₁-C₄-Alkoxycarbonylamino sind, wobei R₉ und R₁₁ vorzugsweise Wasserstoff bedeuten,
X₂ Fluor oder insbesondere Chlor ist und
die Naphthalinringe der Farbstoffe der Formel (4) bzw. der Formel (10) jeweils nur eine oder zwei Sulfogruppen, insbesondere jeweils nur eine Sulfogruppe, enthalten.

Ganz besonders bevorzugt als gelb- oder orangefärbende Farbstoffe der Formel (4) sind solche der Formel 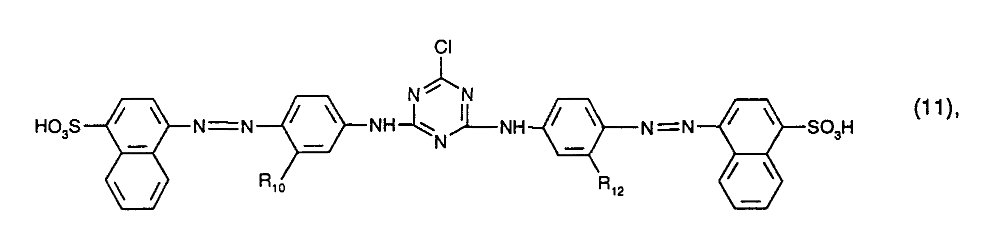 wobei für R₁₀ und R₁₂ die oben angegebenen Bedeutungen und Bevorzugungen gelten. Bevorzugt bedeuten R₁₀ und R₁₂ hierbei Wasserstoff, C₁-C₄-Alkyl, C₁-C₄-Alkoxy, Ureido, Halogen oder gegebenenfalls im Alkylteil durch C₁-C₄-Alkoxy oder Hydroxy substituiertes C₂-C₄-Alkanoylamino oder C₁-C₄-Alkoxycarbonylamino, insbesondere C₁-C₄-Alkyl, C₁-C₄-Alkoxy, Ureido, Halogen oder gegebenenfalls im Alkylteil durch C₁-C₄-Alkoxy oder Hydroxy substituiertes C₂-C₄-Alkanoylamino oder C₁-C₄-Alkoxycarbonylamino und vorzugsweise Ureido.

Bevorzugt als gelb- oder orangefärbende Farbstoffe der Formel (5) sind solche der Formel 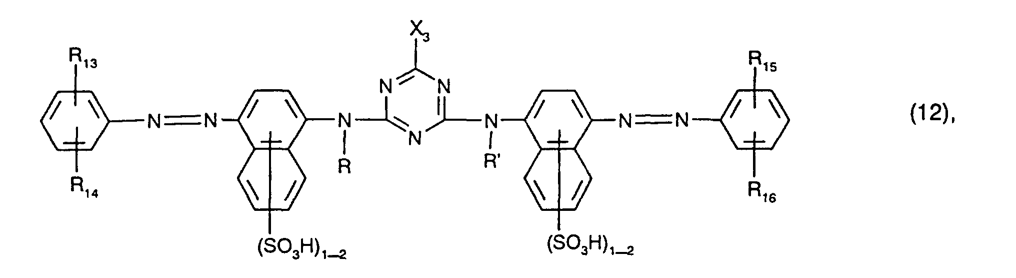 wobei für R, R', R₁₃, R₁₄, R₁₅, R₁₆ und X₃ die oben angegebenen Bedeutungen und Bevorzugungen gelten.

Besonders bevorzugt als gelb- oder orangefärbende Farbstoffe der Formel (5), insbesondere als Farbstoffe der Formel (12), sind solche, worin
R und R' unabhängig voneinander Wasserstoff oder C₁-C₄-Alkyl, insbesondere Wasserstoff, sind,
R₁₃, R₁₄, R₁₅ und R₁₆ unabhängig voneinander Wasserstoff, C₁-C₄-Alkyl, C₁-C₄-Alkoxy, Ureido, Halogen oder gegebenenfalls im Alkylteil durch C₁-C₄-Alkoxy oder Hydroxy substituiertes C₂-C₄-Alkanoylamino oder C₁-C₄-Alkoxycarbonylamino sind, wobei R₁₃ und R₁₅ vorzugsweise Wasserstoff bedeuten,
X₃ Fluor oder insbesondere Chlor ist und
die Naphthalinringe der Farbstoffe der Formel (5) bzw. der Formel (12) jeweils nur eine oder zwei Sulfogruppen, insbesondere jeweils nur eine Sulfogruppe, enthalten.

Von besonderem Interesse als gelb- oder orangefärbende Farbstoffe sind solche der Formel (4), insbesondere solche der Formel (10) und vorzugsweise solche der Formel (11). Von ganz besonderem Interesse als gelb- oder orangefärbende Farbstoffe sind solche der Formel (11), worin R₁₀ und R₁₂ Ureido bedeuten.

Eine bevorzugte Ausführungsform des erfindungsgemässen Verfahrens ist dadurch gekennzeichnet, dass man mindestens einen roffärbenden Farbstoff der Formel (8) zusammen mit mindestens einem gelb- oder orangefärbenden Farbstoff der Formel (4), insbesondere der Formel (10) und vorzugsweise der Formel (11), verwendet. Für die blaufärbenden Farbstoffe der Formeln (1) und (2) gelten hierbei die oben angegebenen Bedeutungen und Bevorzugungen. Insbesondere verwendet man als blaufärbende Farbstoffe mindestens einen Farbstoff der Formeln (6) und (7), wobei R₁, R₂, R₃ und R₄ vorzugsweise Wasserstoff bedeuten.

Eine besonders bevorzugte Ausführungsform des erfindungsgemässen Verfahrens ist dadurch gekennzeichnet, dass man einen rotfärbenden Farbstoff der Formel (9) zusammen mit mindestens einem gelb- oder orangefärbenden Farbstoff der Formel (4), insbesondere der Formel (10) und vorzugsweise der Formel (11), verwendet. Für die blaufärbenden Farbstoffe der Formeln (1) und (2) gelten hierbei die oben angegebenen Bedeutungen und Bevorzugungen. Insbesondere verwendet man als blaufärbende Farbstoffe mindestens einen Farbstoff der Formeln (6) und (7), wobei R₁, R₂, R₃ und R₄ vorzugsweise Wasserstoff bedeuten.

Eine ganz besonders bevorzugte Ausführungsform des erfindungsgemässen Verfahrens ist dadurch gekennzeichnet, dass man einen rotfärbenden Farbstoff der Formel (9) zusammen mit einem gelb- oder orangefärbenden Farbstoff der Formel (11), worin R₁₀ und R₁₂ Ureido sind, verwendet. Für die blaufärbenden Farbstoffe der Formeln (1) und (2) gelten hierbei die oben angegebenen Bedeutungen und Bevorzugungen. Bevorzugt verwendet man als blaufärbende Farbstoffe mindestens einen Farbstoff der Formeln (6) und (7), wobei R₁, R₂, R₃ und R₄ vorzugsweise Wasserstoff bedeuten. Von ganz besonderem Interesse ist hierbei der Farbstoff der Formel (6).

Eine weitere interessante Ausführungsform des erfindungsgemässen Verfahrens betrifft die Erstellung von schwarzen Farbtönen. Vorteilhafterweise verwendet man hierbei die Farbstoffe der Formeln (1) und/oder (2) in einer Menge von 30 bis 70 Gew.-%, insbesondere 40 bis 60 Gew.-%, die Farbstoffe der Formel (3) in einer Menge von 3 bis 20 Gew.-%, insbesondere 5 bis 15 Gew.-%, und die Farbstoffe der Formeln (4) und/oder (5) in einer Menge von 30 bis 50 Gew.-%, insbesondere 35 bis 45 Gew.-%. Die Mengenangaben beziehen sich hierbei auf die Gesamtmenge der Farbstoffe der Formeln (1) bis (5). Die Summe der eingesetzten Mengen der Farbstoffe der Formeln (1) bis (5) beträgt daher 100 Gew.-%.

Einen weiteren Gegenstand der vorliegenden Erfindung stellen Farbstoffmischungen dar, welche eine Mischung von
mindestens einen blaufärbenden Farbstoff der Formel (1) oder (2),
zusammen mit mindestens einem rotfärbenden Farbstoff der Formel (3) und
zusammen mit mindestens einem gelb- oder orangefärbenden Farbstoff der Formel (4) oder (5) enthalten. Hierbei gelten für die Farbstoffe der Formeln (1), (2), (3), (4) und (5) sowie für deren Mischungen die oben angegebenen Bedeutungen und Bevorzugungen.

Die Farbstoffe der Formeln (1), (2), (3), (4) und (5) sind bekannt oder können in Analogie zu bekannten Farbstoffen hergestellt werden. So können z.B. Farbstoffe der Formeln (1) und (2) gemäss den Angaben der US-A-4,009,156 und der US-A-4,591,634 erhalten werden.

Farbstoffe der Formel (3) können beispielsweise erhalten werden, indem man Cyanurhalogenid mit den Aminen der Formeln 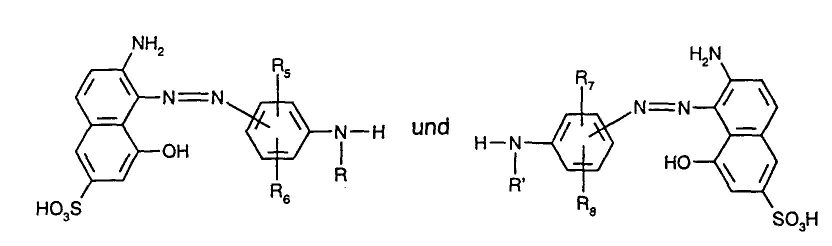 kondensiert.

Farbstoffe der Formel (4) können z.B. erhalten werden, indem man Cyanurhalogenid mit den Aminen der Formeln 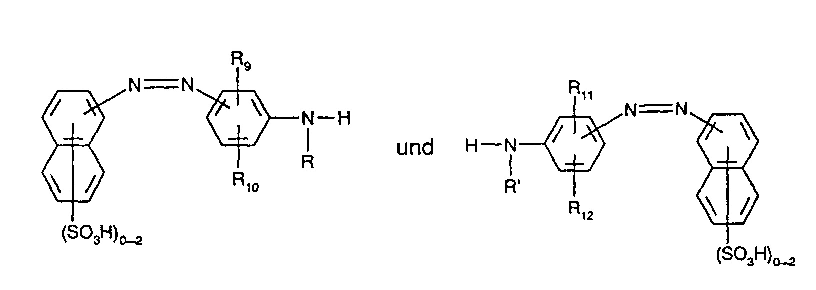 kondensiert.

Farbstoffe der Formel (5) können z.B. erhalten werden, indem man Cyanurhalogenid mit den Aminen der Formeln 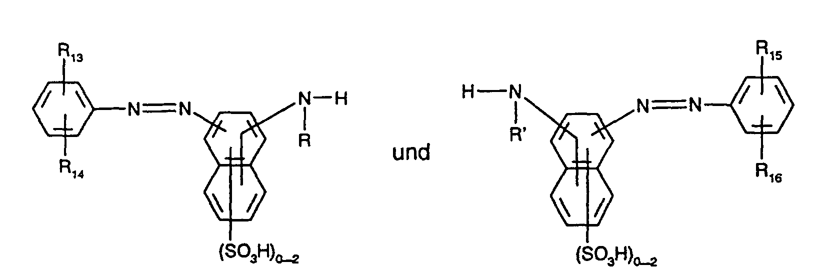 kondensiert.

Vorzugsweise setzt man das Cyanurhalogenid zunächst mit in etwa stöchiometrischen Mengen einer der zwei Aminoazoverbindungen bei einer Temperatur von -5 bis 20°C um, wobei der pH-Wert durch Zugabe geeigneter Basen, z.B. Alkalimetallbasen wie Lithium-, Natrium- oder Kaliumhydroxid oder -carbonat, neutral bis leicht sauer, vorzugsweise bei 5 bis 7, gehalten wird. Das erhaltene Triazinderivat kann abgeschieden werden oder es kann das Reaktionsgemisch direkt für eine weitere Reaktion verwendet werden. Zu dem erhaltenen Reaktionsgemisch oder dem zuvor abgeschiedenen Triazinderivat werden zweckmässigerweise in etwa stöchiometrische Mengen der anderen der zwei Aminoazoverbindungen gegeben und diese bei leicht erhöhter Temperatur, vorzugsweise bei 30 bis 50°C und einem neutralen bis leicht sauren pH-Wert, der vorzugsweise 6 bis 7 beträgt, mit dem Triazinderivat zur Reaktion gebracht. Handelt es sich bei den zwei Aminoazoverbindungen um identische Aminoazoverbindungen, so setzt man ca. 2 Aequivalente dieses Aminoazofarbstoffes mit 1 Aequivalent Cyanurhalogenid um, wobei die Temperatur vorzugsweise zunächst bei -5 bis 20°C gehalten und dann auf ca. 30 bis 50°C erhöht wird.

Die Aminoazoverbindungen sind bekannt oder können in Analogie zu bekannten Verbindungen hergestellt werden. So können diese Azoverbindungen durch allgemein übliche Diazotierungs- und Kupplungsreaktionen erhalten werden.

Die Diazotierung erfolgt üblicherweise mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 30°C und vorzugsweise bei 0 bis 10°C.

Die Kupplung erfolgt üblicherweise bei sauren, neutralen bis schwach alkalischen pH-Werten und Temperaturen von beispielsweise -5 bis 30°C, vorzugsweise 0 bis 25°C.

Die in dem erfindungsgemässen Verfahren zum Trichromie-Färben oder -Bedrucken verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die in dem erfindungsgemässen Verfahren verwendeten Farbstoffe können weitere Zusätze, wie z.B. Kochsalz oder Dextrin, enthalten.

Das erfindungsgemässe Verfahren zum Trichromie-Färben oder -Bedrucken kann auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Das erfindungsgemässe Verfahren zum Trichromie-Färben oder -Bedrucken ist auch zum Färben aus Kurzflotten, wie z.B. bei Kontinuefärbeverfahren oder diskontinuierlichen und kontinuierlichen Schaumfärbeverfahren, geeignet.

Die Mengen, in denen die einzelnen Farbstoffe in den Färbebädern oder Druckpasten verwendet werden, können je nach der gewünschten Farbtiefe in weiten Grenzen schwanken, im allgemeinen haben sich Mengen von 0,01 bis 15 Gew.-%, insbesondere 0,1 bis 10 Gew.-%, bezogen auf das Färbegut bzw. die Druckpaste, als vorteilhaft erwiesen.

Bevorzugt ist das Färben, welches insbesondere nach dem Ausziehverfahren erfolgt.

Vorzugsweise färbt man bei einem pH-Wert von 3 bis 7, insbesondere 3 bis 5. Das Flottenverhältnis kann innerhalb eines weiten Bereichs gewählt werden, z.B. von 1:5 bis 1:50, vorzugsweise 1:5 bis 1:30. Vorzugsweise färbt man bei einer Temperatur von 70 bis 110°C, insbesondere 80 bis 105°C.

Die in dem erfindungsgemässen Verfahren verwendeten Farbstoffe zeichnen sich beim Trichromie-Färben oder -Bedrucken durch gleichmässigen Farbaufbau, gutes Aufziehverhalten, gute Nuancenkonstanz auch in verschiedenen Konzentrationen, gute Echtheiten und Löslichkeit sowie insbesondere durch sehr gute Kombinierbarkeit aus.

Das erfindungsgemässe Verfahren zum Trichromie-Färben oder -Bedrucken eignet sich zum Färben oder Bedrucken sowohl von natürlichen Polyamidmaterialien wie z.B. Wolle, wie insbesondere von synthetischen Polyamidmaterialien, wie z.B. Polyamid 6 oder Polyamid 6.6, und ist geeignet zum Färben oder Bedrucken von Woll- und synthetischen Polyamid-Mischgeweben oder -Garnen.

Das genannte Textilmaterial kann dabei in den verschiedensten Verarbeitungsformen vorliegen, wie z.B. als Faser, Garn, Gewebe, Gewirke oder in Form von Teppichen.

Es werden egale Färbungen mit guten Allgemeinechtheiten, insbesondere guter Reib-, Nass-, Nassreib- und Lichtechtheit erhalten.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: 200 Teile entmineralisiertes Wasser werden bei Raumtemperatur mit Essigsäure auf einen pH-Wert von 3,5 gestellt. Dann gibt man eine Mischung von 1 Teil eines Farbstoffs, der in Form der freien Säure der Verbindung der Formel 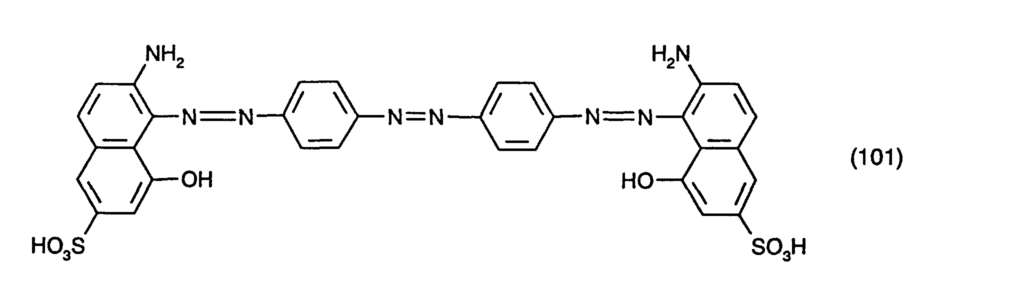 entspricht,
0,19 Teilen eines Farbstoffs, der in Form der freien Säure der Verbindung der Formel 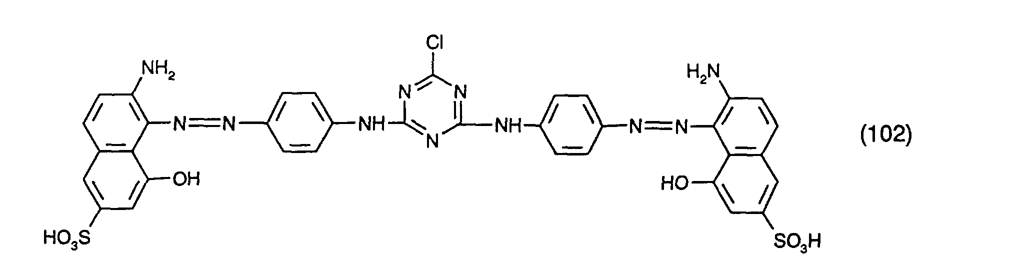 entspricht, und
0,8 Teilen eines Farbstoffs, der in Form der freien Säure der Verbindung der Formel 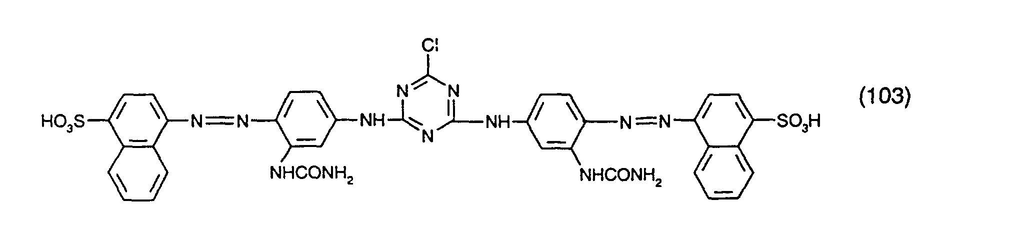 entspricht, zu. In die erhaltene Farbstofflösung geht man mit 10 Teilen Polyamid-6.6 Fasermaterial (Helancatrikot) ein und erwärmt das Färbebad innerhalb von 45 Minuten auf eine Temperatur von ca. 100°C. Man hält die Temperatur 60 Minuten, kühlt anschliessend auf eine Temperatur von 70°C ab und entnimmt das Färbegut, welches mit Wasser gespült und anschliessend getrocknet wird. Man erhält ein in einem schwarzen Farbton gefärbtes Gewebe.

## Patentansprüche

1. Verfahren zum Trichromie-Färben oder -Bedrucken von natürlichem oder synthetischem Polyamidfasermaterial, **dadurch gekennzeichnet, dass**
man mindestens einen blaufärbenden Farbstoff der Formel (1) oder (2) 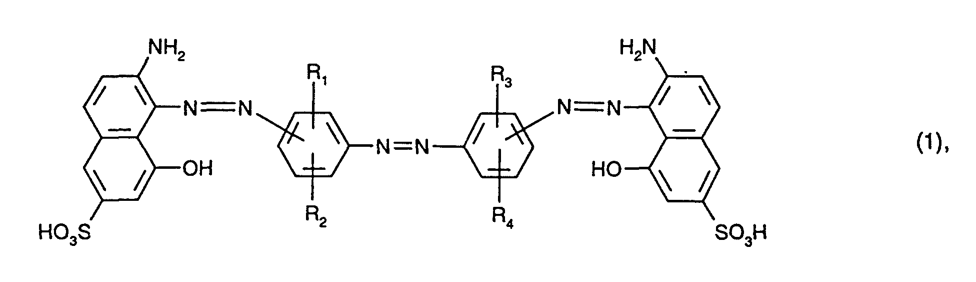 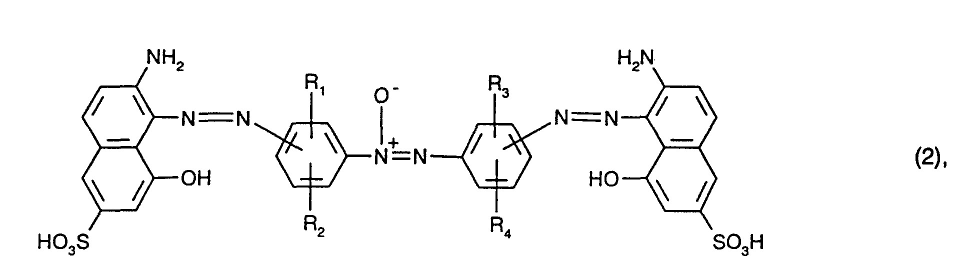 worin
R₁, R₂, R₃ und R₄ unabhängig voneinander Wasserstoff, C₁-C₄-Alkyl, C₁-C₄-Alkoxy, C₂-C₄-Alkanoylamino, Ureido, Halogen oder Sulfo sind,
zusammen mit mindestens einem rotfärbenden Farbstoff der Formel (3) 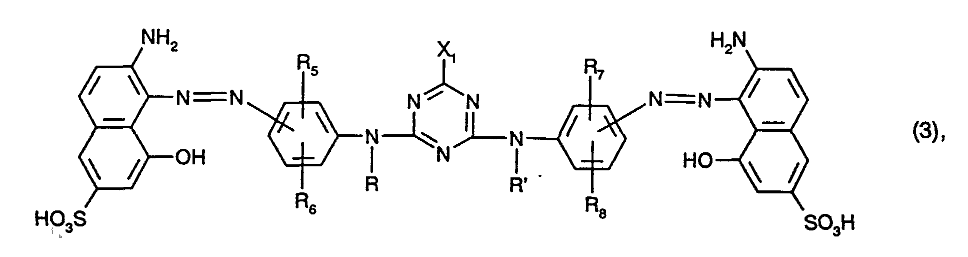 worin
R und R' unabhängig voneinander Wasserstoff oder gegebenenfalls substituiertes C₁-C₄-Alkyl,
R₅, R₆, R₇ und R₈ unabhängig voneinander Wasserstoff, C₁-C₄-Alkyl, C₁-C₄-Alkoxy, C₂-C₄-Alkanoylamino, Ureido, Halogen oder Sulfo sind und
X₁ Halogen ist,
und zusammen mit mindestens einem gelb- oder orangefärbenden Farbstoff der Formel (4) oder (5) 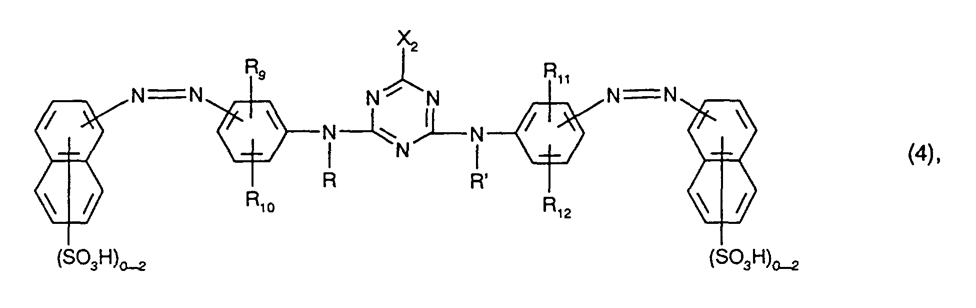 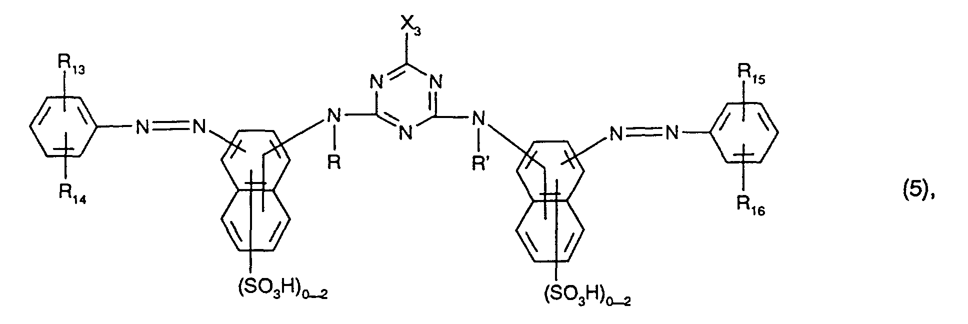 worin
R und R' unabhängig voneinander Wasserstoff oder gegebenenfalls substituiertes C₁-C₄-Alkyl,
X₂ und X₃ Halogen und
R₉, R₁₀, R₁₁, R₁₂, R₁₃, R₁₄, R₁₅ und R₁₆ unabhängig voneinander Wasserstoff, C₁-C₄-Alkyl, C₁-C₄-Alkoxy, Ureido, Halogen, Sulfo oder gegebenenfalls im Alkylteil substituiertes C₂-C₄-Alkanoylamino oder C₁-C₄-Alkoxycarbonylamino bedeuten,
verwendet.

2. Verfahren gemäss Anspruch 1, **dadurch gekennzeichnet, dass**
man als blaufärbenden Farbstoff mindestens einen Farbstoff der Formel 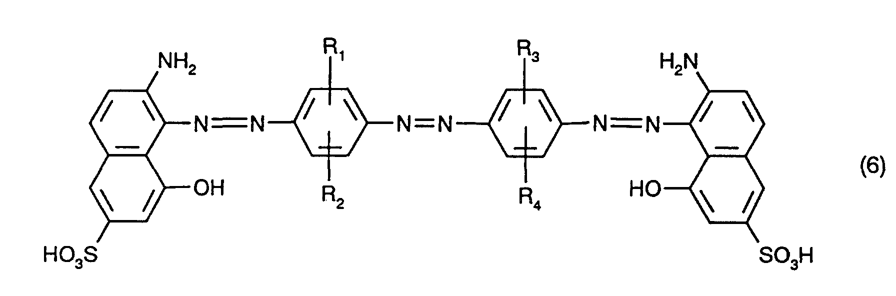 oder 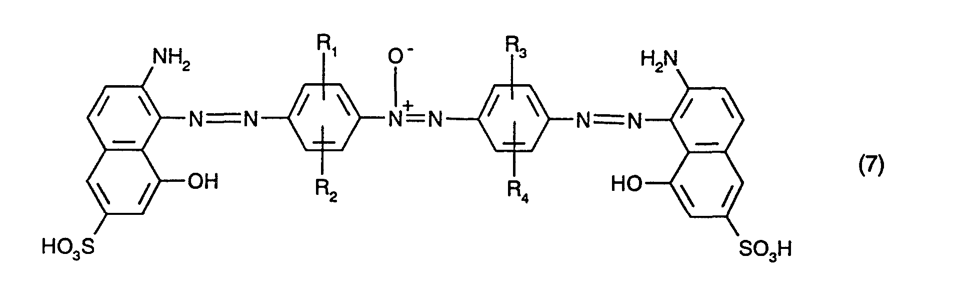 verwendet, worin
R₁, R₂, R₃ und R₄ die in Anspruch 1 angegegebenen Bedeutungen haben.

3. Verfahren gemäss einem der Ansprüche 1 und 2, **dadurch gekennzeichnet, dass** R₁, R₂, R₃ und R₄ Wasserstoff sind.

4. Verfahren gemäss einem der Ansprüche 1 bis 3, **dadurch gekennzeichnet, dass** man als rotfärbenden Farbstoff mindestens einen Farbstoff der Formel 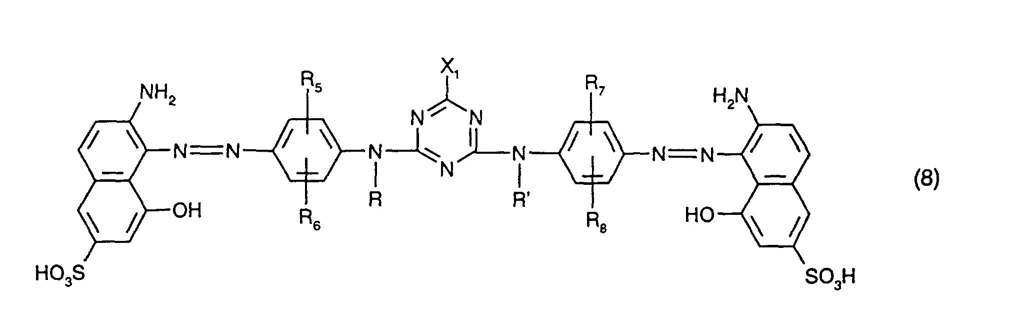 verwendet, worin
R, R', R₅, R₆, R₇, R₈ und X₁ die in Anspruch 1 angegebenen Bedeutungen haben.

5. Verfahren gemäss einem der Ansprüche 1 bis 4, **dadurch gekennzeichnet, dass** R₅, R₆, R₇ und R₈ unabhängig voneinander Wasserstoff, C₁-C₄-Alkyl, C₁-C₄-Alkoxy, C₂-C₄-Alkanoylamino, Ureido oder Halogen, insbesondere Wasserstoff, sind.

6. Verfahren gemäss einem der Ansprüche 1 bis 5, **dadurch gekennzeichnet, dass** man als gelb- oder orangefärbenden Farbstoff mindestens einen Farbstoff der Formel 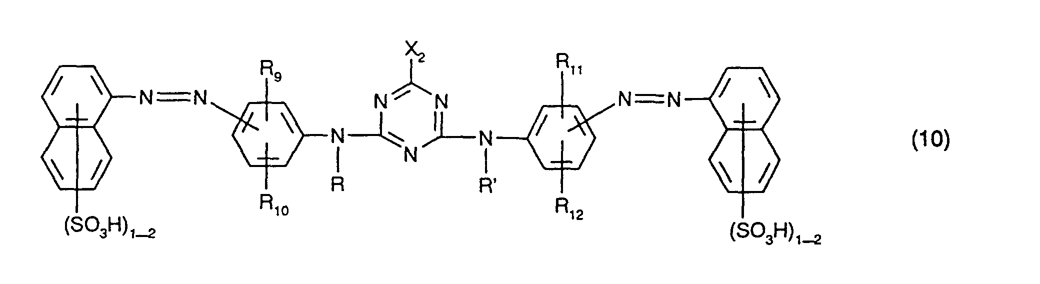 verwendet, worin
R, R', R₉, R₁₀, R₁₁, R₁₂ und X₂ die in Anspruch 1 angegebenen Bedeutungen haben.

7. Verfahren gemäss einem der Ansprüche 1 bis 6, **dadurch gekennzeichnet, dass** R₉, R₁₀, R₁₁, R₁₂, R₁₃, R₁₄, R₁₅ und R₁₆ unabhängig voneinander Wasserstoff, C₁-C₄-Alkyl, C₁-C₄-Alkoxy, Ureido, Halogen oder gegebenenfalls im Alkylteil durch C₁-C₄-Alkoxy oder Hydroxy substituiertes C₂-C₄-Alkanoylamino oder C₁-C₄-Alkoxycarbonylamino sind.

8. Verfahren gemäss einem der Ansprüche 1 bis 7, **dadurch gekennzeichnet, dass** R und R' Wasserstoff sind.

9. Verfahren gemäss einem der Ansprüche 1 bis 8, **dadurch gekennzeichnet, dass** X₁, X₂ und X₃ Chlor sind.

10. Verfahren gemäss einem der Ansprüche 1 bis 3, **dadurch gekennzeichnet, dass** man als rotfärbenden Farbstoff einen Farbstoff der Formel 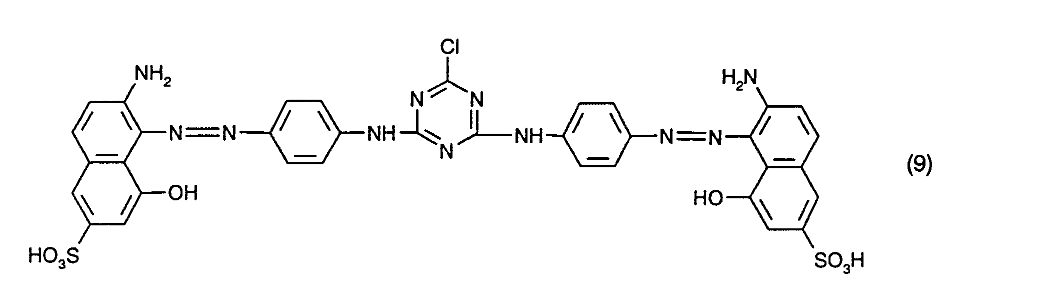 und als gelb- oder orangefärbenden Farbstoff mindestens einen Farbstoff der Formel 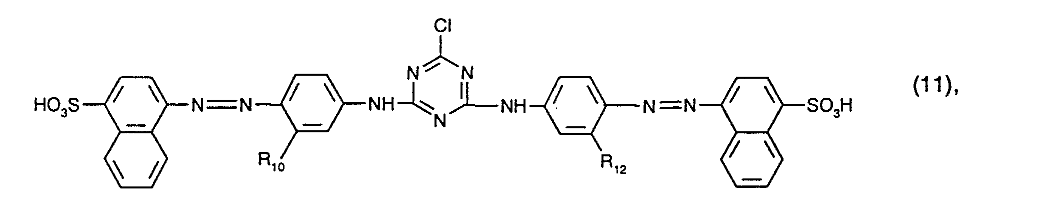 worin R₁₀ und R₁₂ unabhängig voneinander Wasserstoff, C₁-C₄-Alkyl, C₁-C₄-Alkoxy, Ureido, Halogen oder gegebenenfalls im Alkylteil durch C₁-C₄-Alkoxy oder Hydroxy substituiertes C₂-C₄-Alkanoylamino oder C₁-C₄-Alkoxycarbonylamino, insbesondere Ureido, sind, verwendet.

11. Verfahren gemäss einem der Ansprüche 1 bis 10, **dadurch gekennzeichnet, dass** man Wolle oder synthetisches Polyamidfasermaterial färbt oder bedruckt.

12. Verfahren gemäss Anspruch 11, **dadurch gekennzeichnet, dass** man synthetisches Polyamidfasermaterial färbt oder bedruckt.

13. Farbstoffmischungen, **dadurch gekennzeichnet, dass** sie mindestens einen blaufärbenden Farbstoff der Formel (1) oder (2) 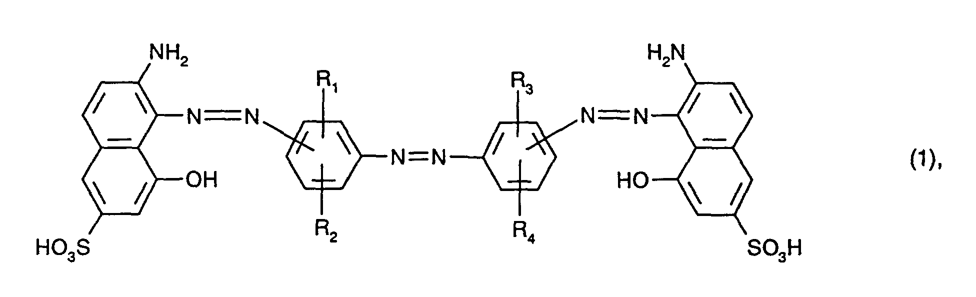 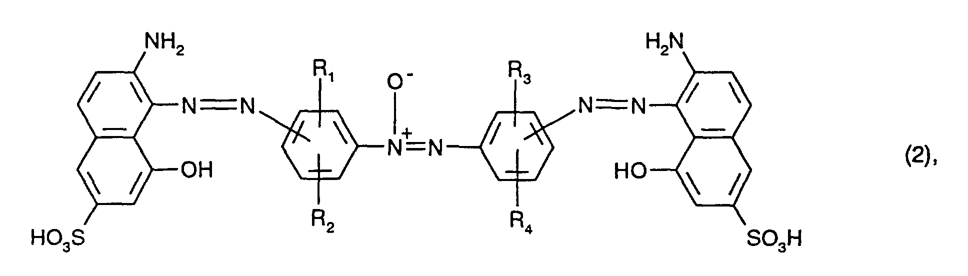 worin
R₁, R₂, R₃ und R₄ unabhängig voneinander Wasserstoff, C₁-C₄-Alkyl, C₁-C₄-Alkoxy, C₂-C₄-Alkanoylamino, Ureido, Halogen oder Sulfo sind,
zusammen mit mindestens einem rotfärbenden Farbstoff der Formel (3) 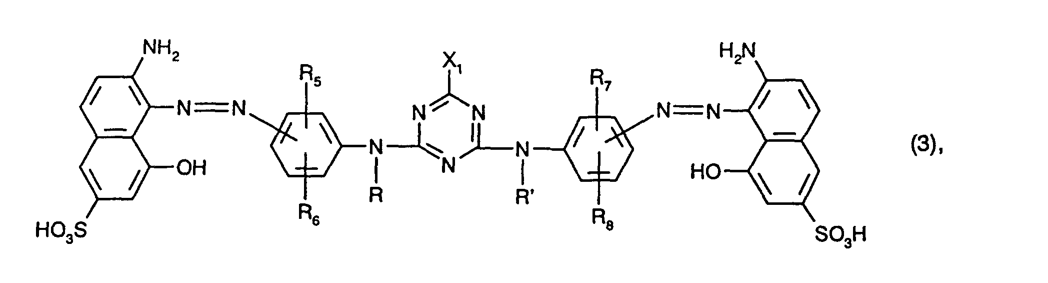 worin
R und R' unabhängig voneinander Wasserstoff oder gegebenenfalls substituiertes C₁-C₄-Alkyl,
R₅, R₆, R₇ und R₈ unabhängig voneinander Wasserstoff, C₁-C₄-Alkyl, C₁-C₄-Alkoxy, C₂-C₄-Alkanoylamino, Ureido, Halogen oder Sulfo sind und
X₁ Halogen ist,
und zusammen mit mindestens einem gelb- oder orangefärbenden Farbstoff der Formel (4) oder (5) 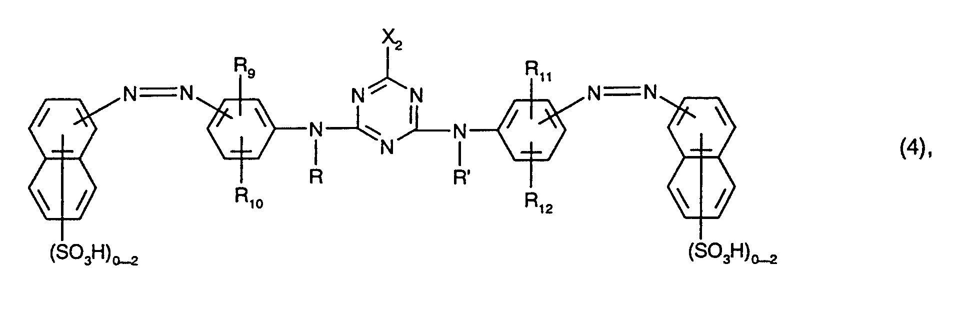 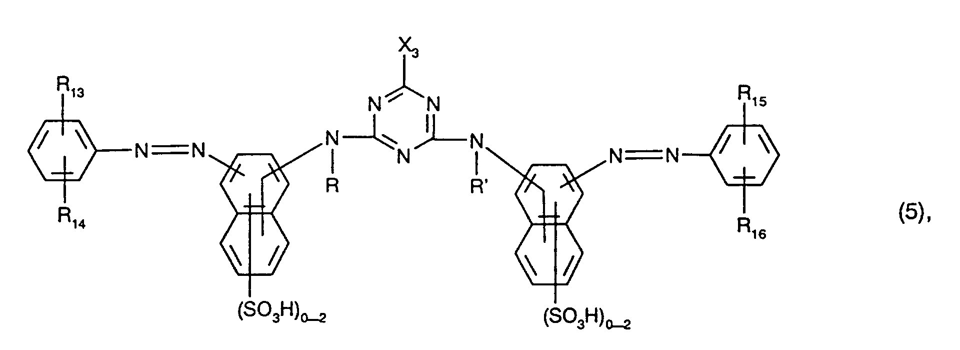 worin
R und R' unabhängig voneinander Wasserstoff oder gegebenenfalls substituiertes C₁-C₄-Alkyl,
X₂ und X₃ Halogen und
R₉, R₁₀, R₁₁, R₁₂, R₁₃, R₁₄, R₁₅ und R₁₆ unabhängig voneinander Wasserstoff, C₁-C₄-Alkyl, C₁-C₄-Alkoxy, Ureido, Halogen, Sulfo oder gegebenenfalls im Alkylteil substituiertes C₂-C₄-Alkanoylamino oder C₁-C₄-Alkoxycarbonylamino bedeuten,
enthalten.

## Claims

1. A process for trichromatic dyeing or printing of natural or synthetic polyamide fibre material which comprises using at least one blue-dyeing dye of formula (1) or (2) 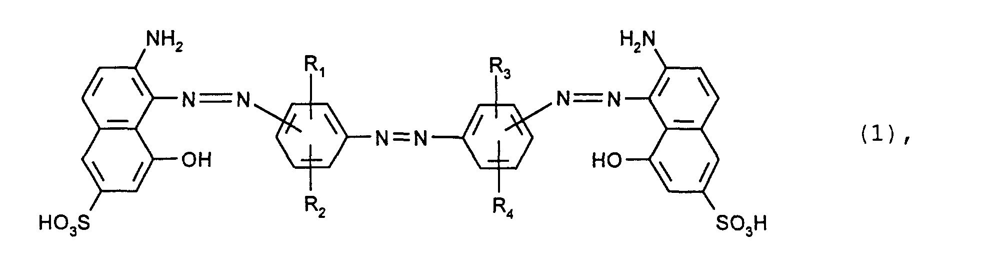 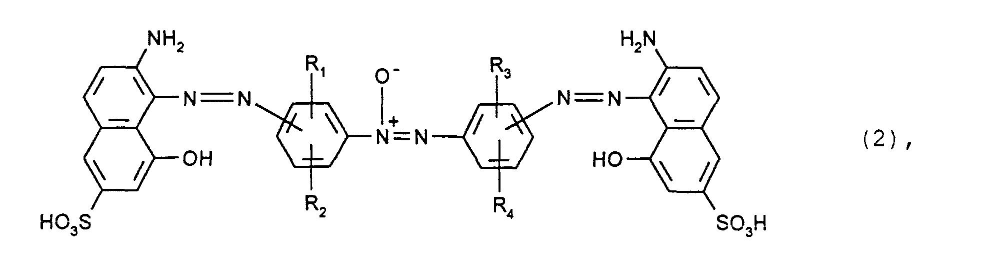 in which
R₁, R₂, R₃ and R₄ are each independently of one another hydrogen, C₁-C₄alkyl, C₁-C₄alkoxy, C₂-C₄alkanoylamino, ureido, halogen or sulfo,
together with at least one red-dyeing dye of formula (3) 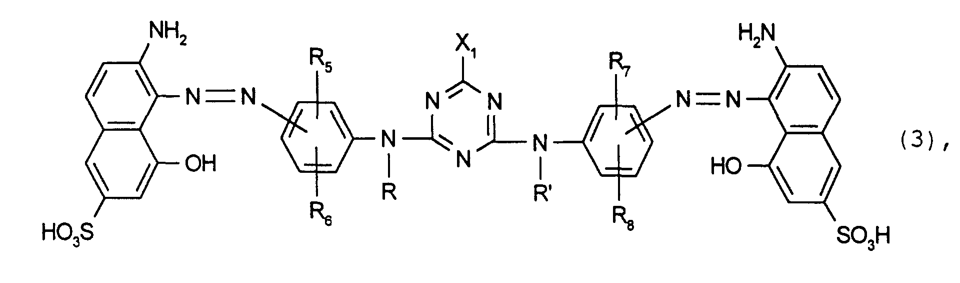 in which
R and R' are each independently of the other hydrogen or unsubstituted or substituted C₁-C₄alkyl,
R₅, R₆, R₇ and R₈ are each independently of one another hydrogen, C₁-C₄alkyl, C₁-C₄alkoxy, C₂-C₄alkanoylamino, ureido, halogen or sulfo, and
X₁ is halogen,
and together with at least one yellow- or orange-dyeing dye of formula (4) or (5) 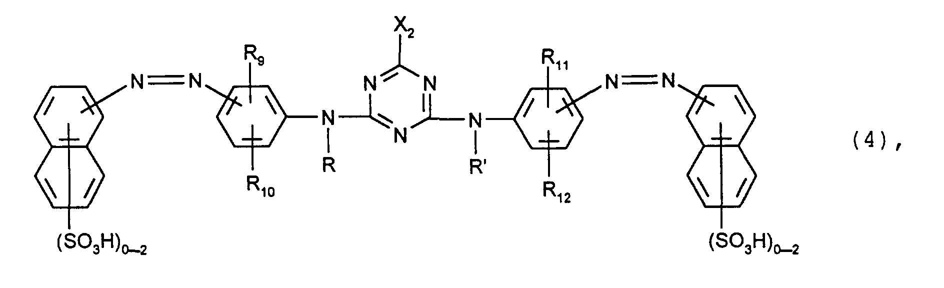 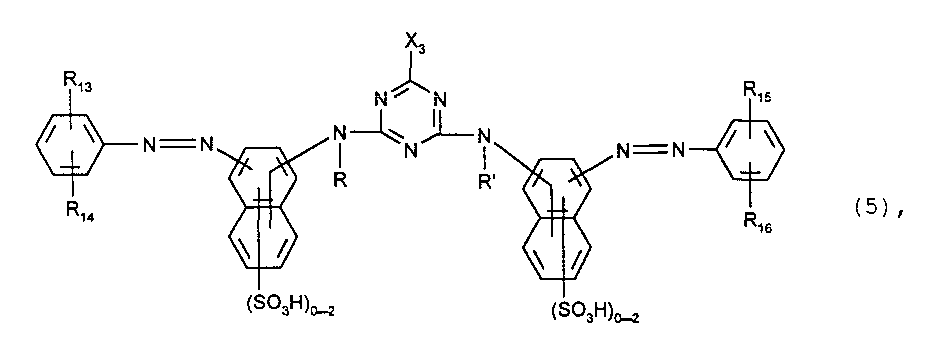 in which
R and R' are each independently of the other hydrogen or unsubstituted or substituted C₁-C₄alkyl,
X₂ and X₃ are halogen, and
R₉, R₁₀, R₁₁, R₁₂, R₁₃, R₁₄, R₁₅ and R₁₆ are each independently of one another hydrogen, C₁-C₄alkyl, C₁-C₄alkoxy, ureido, halogen, sulfo, or C₂-C₄alkanoylamino or C₁-C₄alkoxycarbonylamino which may be substituted in the alkyl moiety.

2. A process according to claim 1, which comprises using as blue-dyeing dye at least one dye of formula 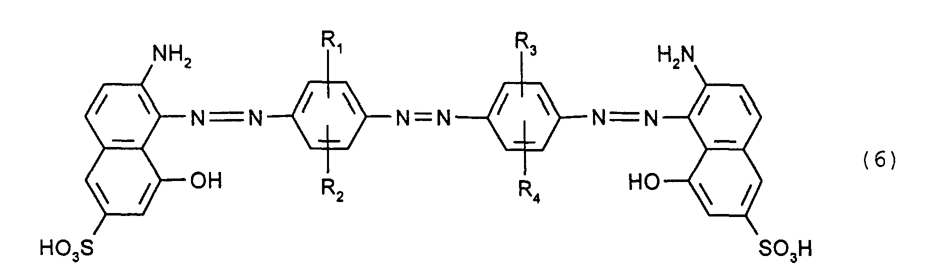 or 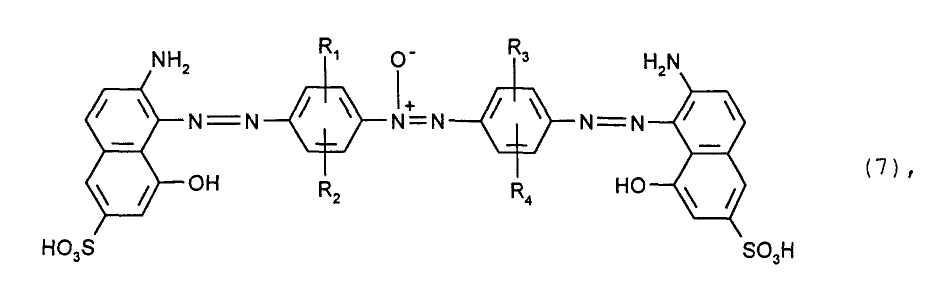 in which
R₁, R₂, R₃ and R₄ have the meanings claimed in claim 1.

3. A process according to either claim 1 or claim 2, wherein R₁, R₂, R₃ and R₄ are hydrogen.

4. A process according to any one of claims 1 to 3, which comprises using
as red-dyeing dye at least one dye of formula 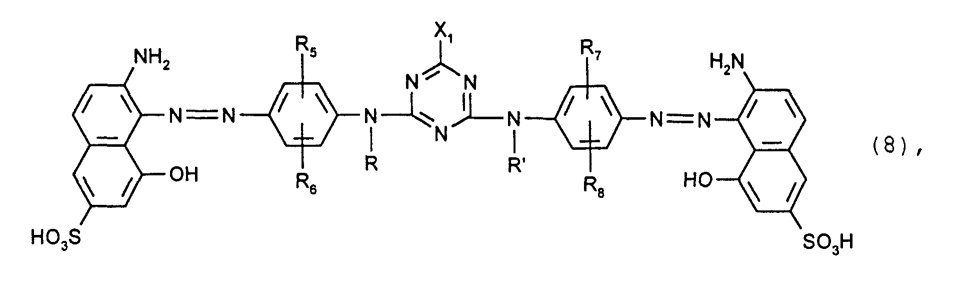 in which
R, R', R₅, R₆, R₇, R₈ and X₁ have the meanings claimed in claim 1.

5. A process according to any one of claims 1 to 4, wherein R₅, R₆, R₇ and R₈ are each independently of one another hydrogen, C₁-C₄alkyl, C₁-C₄alkoxy, C₂-C₄alkanoylamino, ureido or halogen, preferably hydrogen.

6. A process according to any one of claims 1 to 5, which comprises using
as yellow- or orange-dyeing dye at least one dye of formula 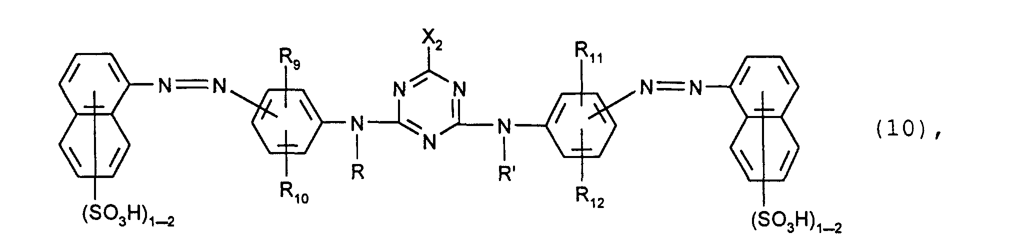 in which
R, R', R₉, R₁₀, R₁₁, R₁₂ and X₂ have the meanings claimed in claim 1.

7. A process according to any one of claims 1 to 6, wherein R₉, R₁₀, R₁₁, R₁₂, R₁₃, R₁₄, R₁₅ and R₁₆ are each independently of one another hydrogen, C₁-C₄alkyl, C₁-C₄alkoxy, ureido, halogen, or C₂-C₄alkanoylamino or C₁-C₄alkoxycarbonylamino which may be substituted in the alkyl moiety by C₁-C₄alkoxy or hydroxy.

8. A process according to any one of claims 1 to 7, wherein R and R' are hydrogen.

9. A process according to any one of claims 1 to 8, wherein X₁, X₂ and X₃ are chloro.

10. A process according to any one of claims 1 to 3, which comprises using
as red-dyeing dye a dye of formula 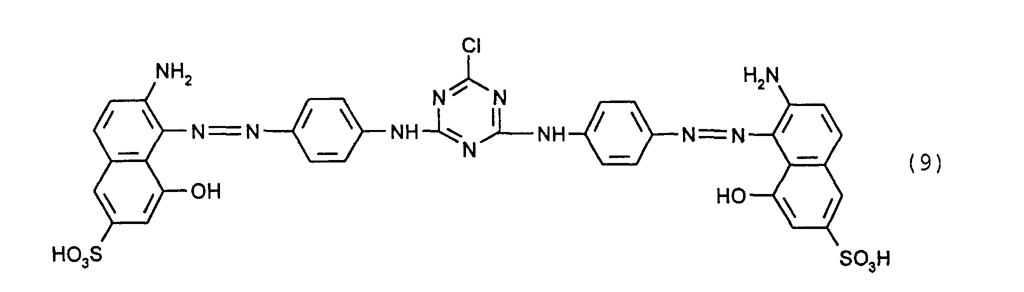 and as yellow- or orange-dyeing dye at least one dye of formula 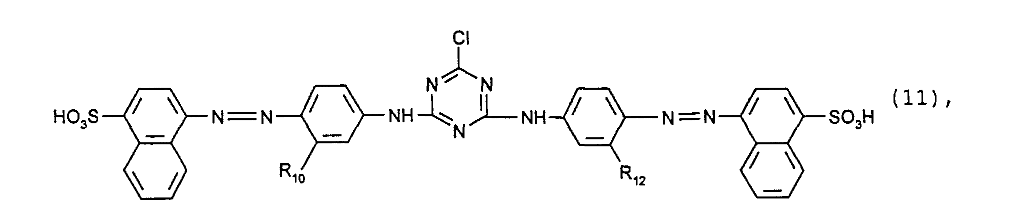 in which R₁₀ and R₁₂ are each independently of the other hydrogen, C₁-C₄alkyl, C₁-C₄alkoxy, ureido, halogen, or C₂-C₄alkanoylamino or C₁-C₄alkoxycarbonylamino which may be substituted in the alkyl moiety by C₁-C₄alkoxy or hydroxy, and are preferably ureido.

11. A process according to any one of claims 1 to 10, which comprises dyeing or printing wool or synthetic polyamide fibre material.

12. A process according to claim 11, which comprises dyeing or printing synthetic polyamide fibre material.

13. A dye mixture, comprising
at least one blue-dyeing dye of formula (1) or (2) 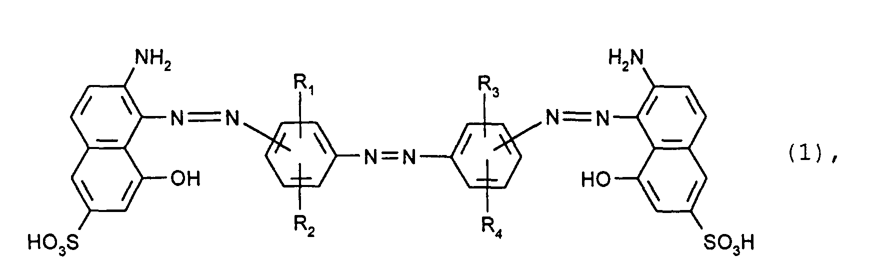 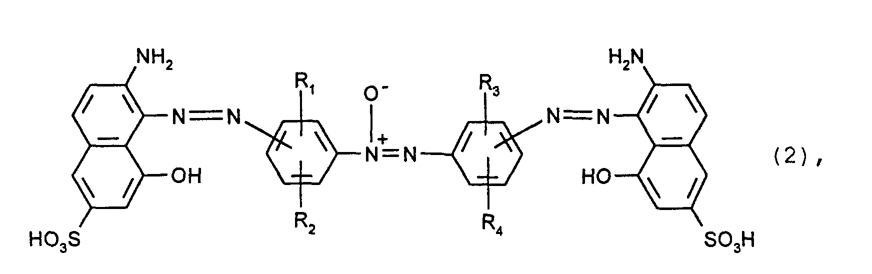 in which
R₁, R₂, R₃ and R₄ are each independently of one another hydrogen, C₁-C₄alkyl, C₁-C₄alkoxy, C₂-C₄alkanoylamino, ureido, halogen or sulfo,
together with at least one red-dyeing dye of formula (3) 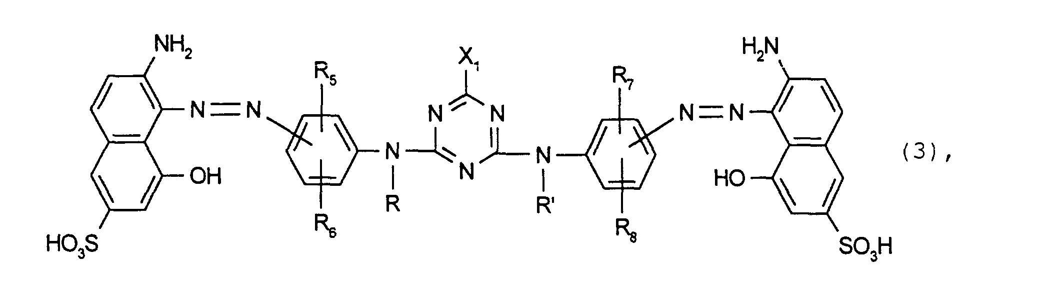 in which
R and R' are each independently of the other hydrogen or unsubstituted or substituted C₁-C₄alkyl,
R₅, R₆, R₇ and R₈ are each independently of one another hydrogen, C₁-C₄alkyl, C₁-C₄alkoxy, C₂-C₄alkanoylamino, ureido, halogen or sulfo, and
X₁ is halogen,
and together with at least one yellow- or orange-dyeing dye of formula (4) or (5) 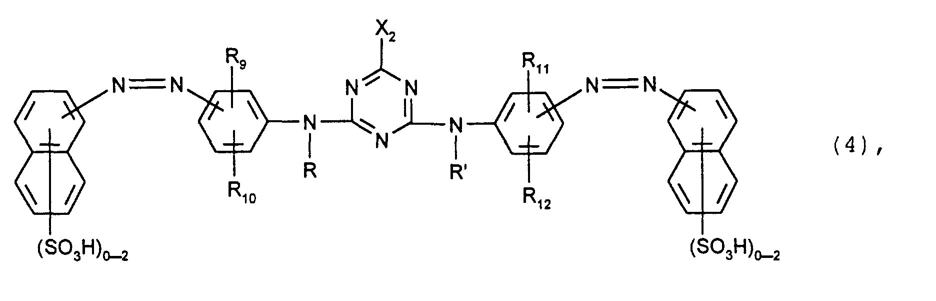 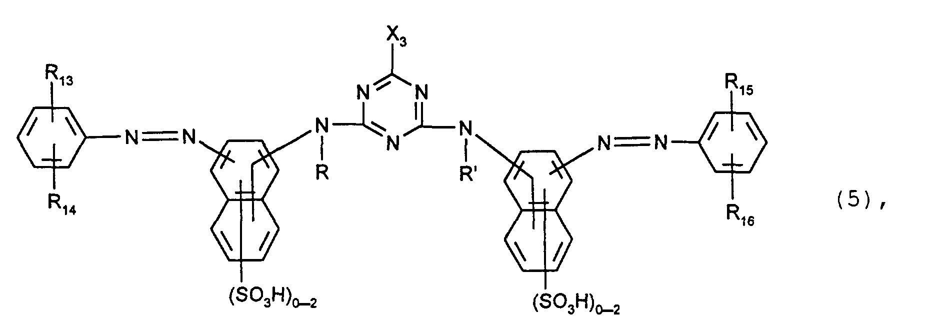 in which
R and R' are each independently of the other hydrogen or unsubstituted or substituted C₁-C₄alkyl,
X₂ and X₃ are halogen, and
R₉, R₁₀, R₁₁, R₁₂, R₁₃, R₁₄, R₁₅ and R₁₆ are each independently of one another hydrogen, C₁-C₄alkyl, C₁₋C₄alkoxy, ureido, halogen, sulfo, or C₂-C₄alkanoylamino or C₁-C₄alkoxycarbonylamino which may be substituted in the alkyl moiety.

## Revendications

1. Procédé pour la teinture ou l'impression en trichromie de matériau de fibres de polyamide naturelles ou synthétiques, **caractérisé en ce qu'**on utilise au moins un colorant de teinture bleue de formule (1) ou (2) 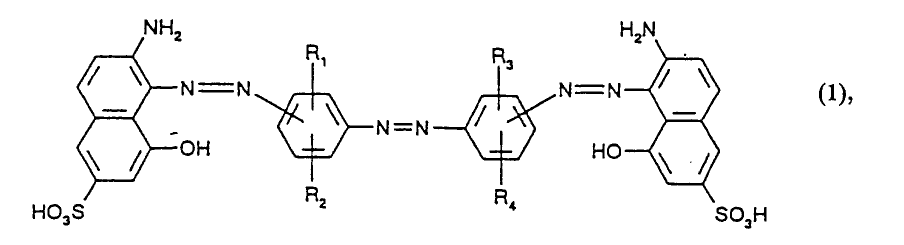 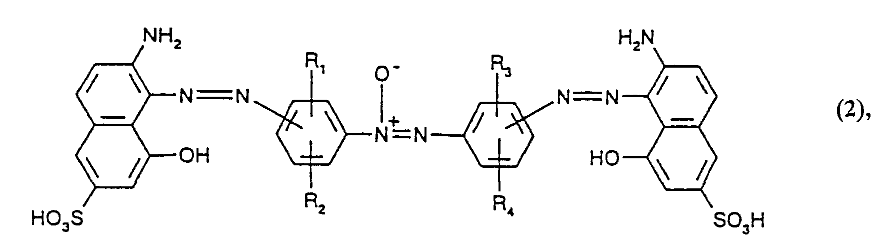 dans lesquelles
R₁, R₂, R₃ et R₄ sont, indépendamment les uns des autres, un atome d'hydrogène, un groupe alkyle en C₁ à C₄, alcoxy en C₁ à C₄, alcanoylamino en C₂ à C₄, uréido, halogène ou sulfo,
en même temps avec au moins un colorant de teinture rouge de formule (3) 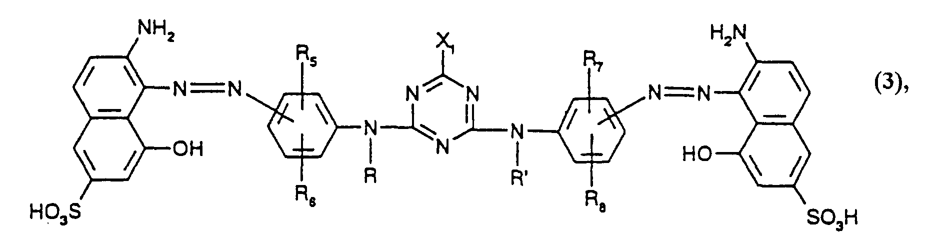 dans laquelle
R et R' sont, indépendamment les uns des autres, un atome d'hydrogène ou un groupe alkyle en C₁ à C₄ éventuellement substitué,
R₅, R₆, R₇ et R₈ sont, indépendamment les uns des autres, un atome d'hydrogène, un groupe alkyle en C₁ à C₄, alcoxy en C₁ à C₄, alcanoylamino en C₂ à C₄, uréido, halogène ou sulfo, et
X₁ est un atome d'halogène,
et en même temps avec au moins un colorant de teinture jaune ou orange de formule (4) ou (5) 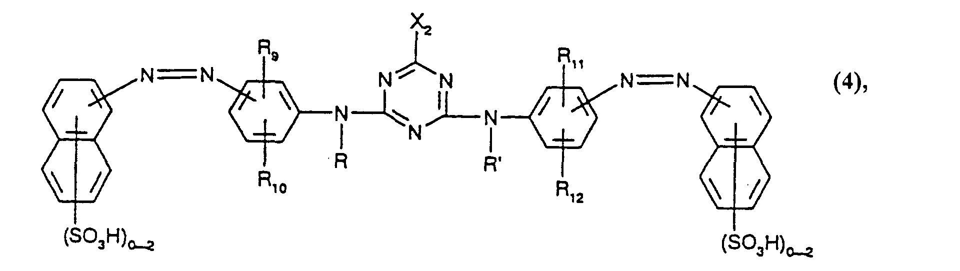 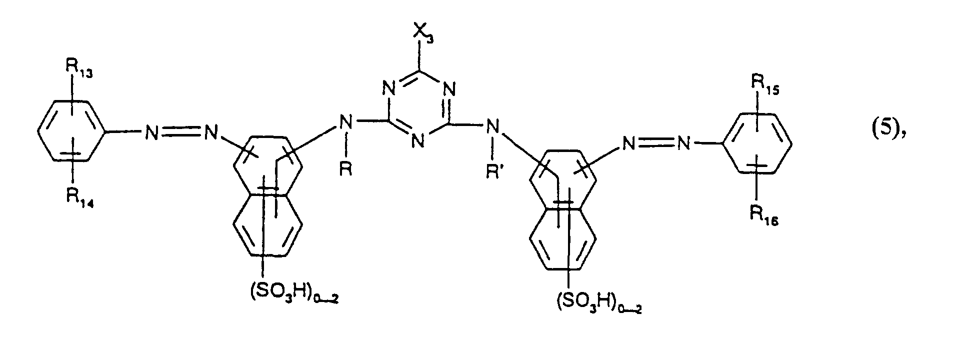 dans lesquelles
R et R' représentent, indépendamment l'un de l'autre, un atome d'hydrogène ou un groupe alkyle en C₁ à C₄ éventuellement substitué,
X₂ et X₃ représentent un atome d'halogène et
R₉, R₁₀, R₁₁, R₁₂, R₁₃, R₁₄, R₁₅ et R₁₆ représentent, indépendamment les uns des autres, un atome d'hydrogène, un groupe alkyle en C₁ à C₄, alcoxy en C₁ à C₄, uréido, halogène sulfo ou alcanoylamino en C₂ à C₄ ou alcoxy-carbonylamino en C₁ à C₄ éventuellement substitué dans la partie alkyle.

2. Procédé selon la revendication 1, **caractérisé en ce qu'**on utilise comme colorant de teinture bleue au moins un colorant de formule 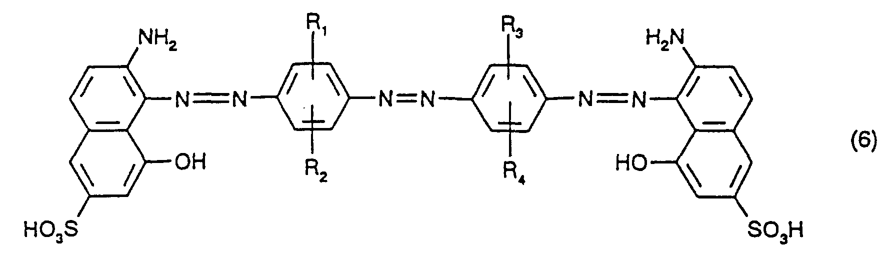 ou 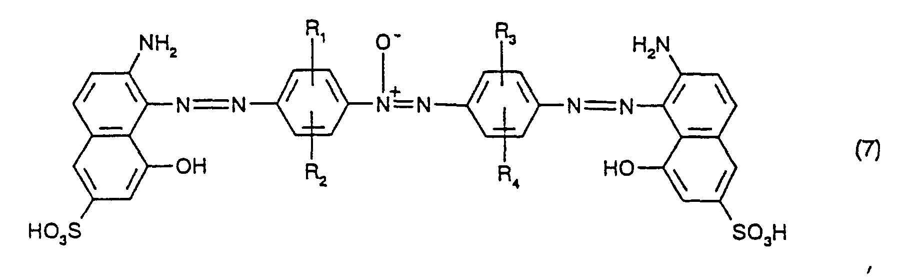 dans laquelle
R₁, R₂, R₃ et R₄ ont les significations indiquées à la revendication 1.

3. Procédé selon l'une des revendications 1 et 2, **caractérisé en ce que** R₁, R₂, R₃ et R₄ sont un atome d'hydrogène.

4. Procédé selon l'une des revendications 1 à 3, **caractérisé en ce qu'**on utilise comme colorant de teinture rouge au moins un colorant de formule 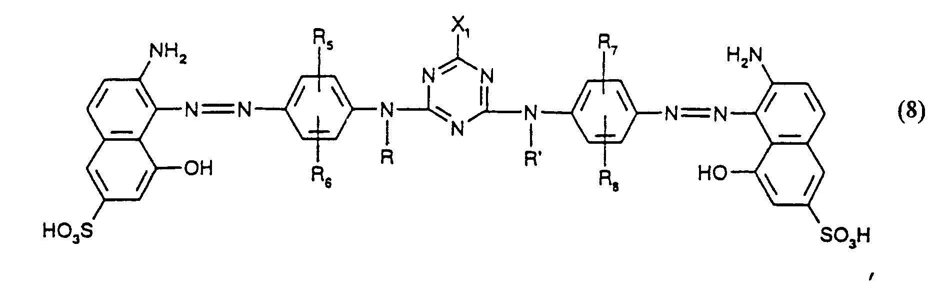 dans laquelle
R, R', R₅, R₆, R₇, R₈ et X₁ ont les significations indiquées à la revendication 1.

5. Procédé selon l'une des revendications 1 à 4, **caractérisé en ce que** R₅, R₆, R₇ et R₈ sont, indépendamment les uns des autres, un atome d'hydrogène, un groupe alkyle en C₁ à C₄, alcoxy en C₁ à C₄, alcanoylamino en C₂ à C₄, uréido ou halogène, en particulier un atome d'hydrogène.

6. Procédé selon l'une des revendications 1 à 5, **caractérisé en ce qu'**on utilise comme colorant de teinture jaune ou orange au moins un colorant de formule 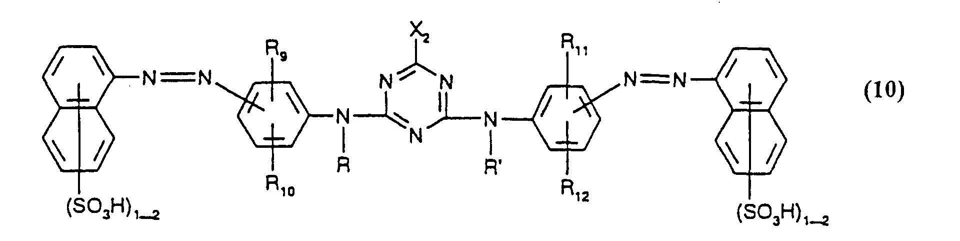 dans laquelle
R, R', R₉, R₁₀, R₁₁, R₁₂ et X₂ ont les significations indiquées à la revendication 1.

7. Procédé selon l'une des revendications 1 à 6, **caractérisé en ce que** R₉, R₁₀, R₁₁, R₁₂, R₁₃, R₁₄, R₁₅ et R₁₆ sont, indépendamment les uns des autres, un atome d'hydrogène, un groupe alkyle en C₁ à C₄, alcoxy en C₁ à C₄, uréido, halogène ou alcanoylamino en C₂ à C₄ ou alcoxycarbonylamino en C₁ à C₄ éventuellement substitué dans la partie alkyle par un groupe alcoxy en C₁ à C₄ ou hydroxy.

8. Procédé selon l'une des revendications 1 à 7, **caractérisé en ce que** R et R' sont un atome d'hydrogène.

9. Procédé selon l'une des revendications 1 à 8, **caractérisé en ce que** X₁, X₂ et X₃ sont un atome de chlore.

10. Procédé selon l'une des revendications 1 à 3, **caractérisé en ce qu'**on utilise comme colorant de teinture rouge un colorant de formule 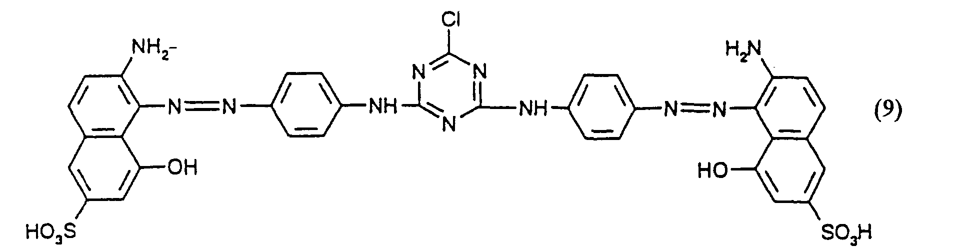 et comme colorant de teinture jaune ou orange au moins un colorant de formule 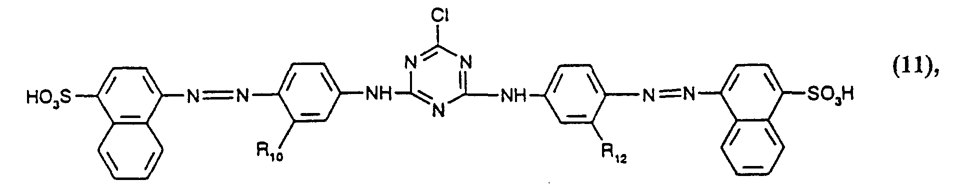 dans laquelle R₁₀ et R₁₂ sont, indépendamment l'un de l'autre, un atome d'hydrogène, un groupe alkyle en C₁ à C₄, alcoxy en C₁ à C₄, uréido, halogène ou alcanoylamino en C₂ à C₄ ou alcoxycarbonylamino en C₁ à C₄, éventuellement substitué dans la partie alkyle par un groupe alcoxy en C₁ à C₄ ou hydroxy, en particulier uréido.

11. Procédé selon l'une des revendications 1 à 10, **caractérisé en ce qu'**on teinte ou on imprime de la laine ou un matériau en fibres de polyamide synthétique.

12. Procédé selon la revendication 11, **caractérisé en ce qu'**on teinte ou on imprime un matériau en fibres de polyamide synthétique.

13. Mélanges de colorants, **caractérisé en ce qu'**ils contiennent au moins un colorant de teinture bleue de formule (1) ou (2) 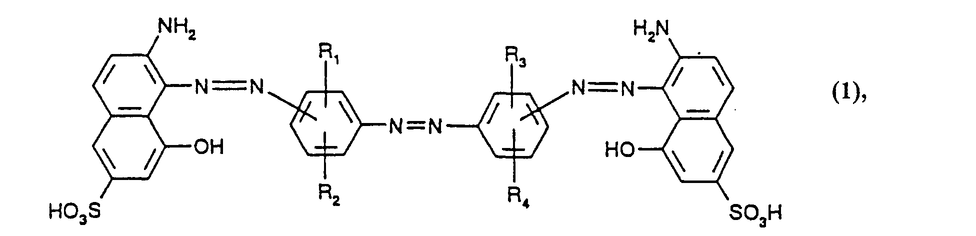 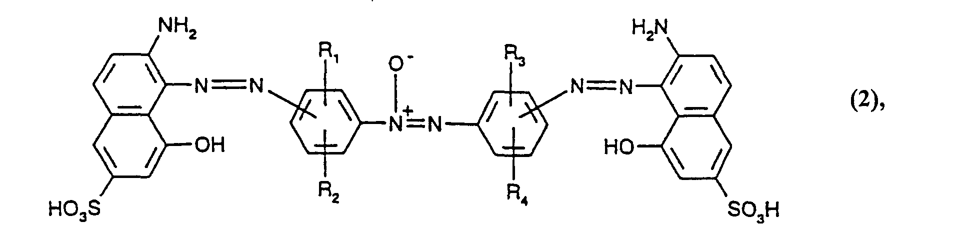 dans lesquelles
R₁, R₂, R₃ et R₄ sont, indépendamment les uns des autres, un atome d'hydrogène, un groupe alkyle en C₁ à C₄, alcoxy en C₁ à C₄, alcanoylamino en C₂ à C₄, uréido, halogène ou sulfo,
en même temps qu'au moins un colorant de teinture rouge de formule (3) 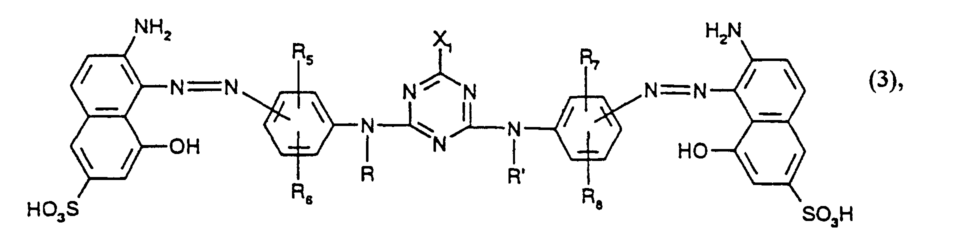 dans laquelle
R et R' sont indépendamment les uns des autres un atome d'hydrogène ou un groupe alkyle en C₁ à C₄ éventuellement substitué,
R₅, R₆, R₇ et R₈ sont, indépendamment les uns des autres, un atome d'hydrogène, un groupe alkyle en C₁ à C₄, alcoxy en C₁ à C₄, alcanoylamino en C₂ à C₄, uréido, halogène ou sulfo, et
X₁ est un atome d'halogène,
et en même temps avec au moins un colorant de teinture jaune ou orange de formule (4) ou (5) 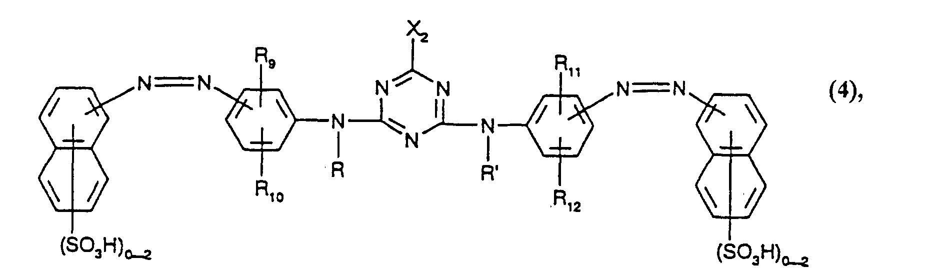 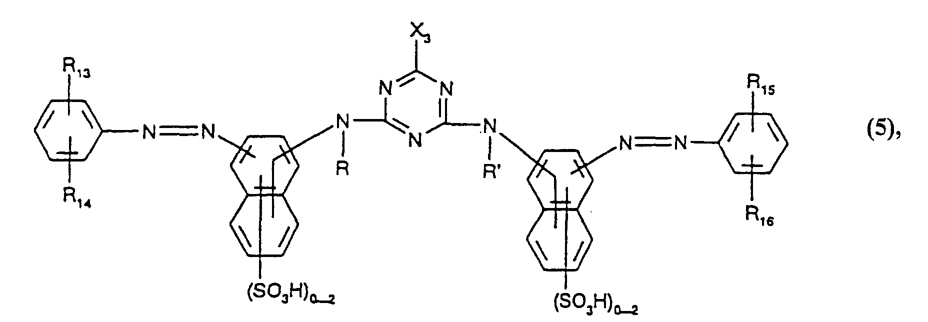 dans lesquelles
R et R' représentent, indépendamment l'un de l'autre, un atome d'hydrogène ou un groupe alkyle en C₁ à C₄ éventuellement substitué,
X₂ et X₃ représentent un atome d'halogène et
R₉, R₁₀, R₁₁, R₁₂, R₁₃, R₁₄, R₁₅ et R₁₆ représentent indépendamment les uns des autres un atome d'hydrogène, un groupe alkyle en C₁ à C₄, alcoxy en C₁ à C₄, uréido, halogène sulfo ou alcanoylamino en C₂ à C₄ ou alcoxy-carbonylamino en C₁ à C₄ éventuellement substitué dans la partie alkyle.
